# EUROPEAN PATENT APPLICATION

(11) **EP 4 435 040 A1**
(43) Date of publication of application: **25.09.2024**
(21) Application number: 23164008.7
(22) Date of filing: 24.03.2023
(51) Int. Cl.: C08J 9/08

(54) **FOAMABLE COMPOSITION**

(71) Applicant: Henkel AG & Co. KGaA, 40589 Düsseldorf (DE)
(72) Inventor: Schaefer, Sascha, 40822 Mettmann (DE); Meier, Daniela, Düsseldorf (DE); Godayol Druguet, Roger, Düsseldorf (DE)

(57) **Abstract**

The invention relates to a two-component foamable silane-modified polymer composition comprising: a component A comprising
(a-1) at least one silane modified polymer, and
(a-2) at least one chemical blowing agent selected from the group consisting of alkali metal bicarbonate, alkali metal carbonate, ammonium bicarbonate and ammonium carbonate, and a component B comprising
(b-1) water, and
(b-2) at least one an organic acid.

The invention also relates to a method for preparing a silane-modified polymer foam attached to a part of assembly in situ, comprising the steps:
I. preparing a two-component foamable silane-modified polymer composition according to any of claims 1 to 12;
II. mixing the component A and component B at a reaction temperature from 15 to 100°C, preferably from 20 to 80°C, to form a reaction mixture; and
III. applying the reaction mixture to at least one surface of part;
to a silane-modified polymer foam obtained by said method, and to use of said two-component foamable silane-modified polymer composition or said silane-modified polymer foam in gasket, sealant or adhesive.

## Description

The invention relates to a two-component foamable silane-modified polymer composition, wherein the resulting foam can inter alia be used as a gasketing, sealing, spacer or NVH (Noise, Vibration, Harshness) material. In addition, the invention relates to a method for preparing a silane-modified polymer SMP foam, to a silane-modified polymer foam obtained by said method and to applications of said two-component foamable silane-modified polymer composition and said silane-modified polymer foam.

Watertight and/or moisture-tight and/or rapid air- or gas-exchange preventing seals are required for a variety of applications, such as for lamp boxes, control cabinets, cable sleeves, containers, refrigerator doors and the like. In these applications, the seal must reliably prevent penetration of water, moisture and/or air into the corresponding inner space for a long period of time.

Traditionally, seals made of stamped elastomers are used here. Another option is the use of fitted rubber profiles (foam rubber). Although these sealing methods are still widely used, they are very expensive because the stamping processes generate a lot of waste, and the fitted rubber profiles have to be cut, inserted and glued by hand and thus are time-consuming to make.

Gaskets preformed to the dimension and the form of the joint to be sealed avoid the aforementioned disadvantages, but these seals must be formed specifically by the manufacturer for each application. Because of the required necessary complex warehousing, this is only worthwhile for mass-produced articles with uniform dimensions.

In a further type of sealing, preprofiled, permanently plastic sealants, e.g., based on butyl rubbers, are placed into openings or on flanges of housing shells and the shells are then joint together in a way that a permanent plastic sealing is formed to seal the entire joint.

For more efficient production of seals, the technology "formed-in-place" or "molded-in-place gaskets" has been established. Room temperature-curing two-components or one-component moisture-curing silane-modified polymer sealants are applied directly to one side of the housing to be sealed, whereupon either the thus applied sealing material is cured, and then a second housing component is placed on the cured material or a second housing component is placed directly onto the sealing material and thereafter the sealing material in between the two housing components is cured. D. di Nicola and R. E. Ledoux discuss this technology in Adhesives Age, 4, 1994, pages 16 to 22 in more detail. However, for joints having large cross-section, the method described above would require a very high amount of sealant, and because of thermal expansion or compression fluctuations of the curing material and the housing components to be sealed, the tightness aimed at would be very difficult to be achieved.

Especially, for these fields of application, the "foam-in-place-gasketing system" has established itself as an economic alternative. In this process, an inert gas is mixed into pumpable 1- or 2-component sealants, usually by use of high pressure, and the sealing material expands during its application onto the housing parts to be sealed, and forms an elastic foamed sealing. For this technique, a number of sealant materials can be used, for example meltable hot-melt adhesives, two-component silane-modified polymer sealants, one-component moisture-curing silane-modified polymer sealants or polyurethane sealants, UV-curing silane-modified polymer or urethane sealants. A review of this technology is provided in S. Hoover, Adhesives Age, 8, 1994, pages 18 to 21. Gaskets manufactured according to this method are in principle suitable for any geometric shape, the seals produced in this way allow hermetic encapsulation even with large temperature fluctuations of the housing to be sealed.

It can also prevent periodically transmitted mechanical stress or prevent two substrates coming into direct contact. That is relevant in the mobility industry such as automotive or rail.

However, conventional chemically foamed gasketing and sealing materials mainly rely on the reaction of an isocyanate with another compound, mainly water to produce carbon dioxide. Alternatively, isocyanate containing formulations are physically foamed using air, nitrogen, hydrogen or fluorohydrocarbons. The resulting material however contains traces of isocyanate which is suspected to be a harmful substance.

It was therefore the object of the present invention to provide compositions, which can be used for the preparation of foam-in-place-gaskets and sealings, which are easy to handle, allow for preparation of sealings exhibiting excellent properties in application, but which avoid the drawbacks of conventional gaskets and sealings of discussed above.

The present invention has achieved said objectives by providing a two-component foamable silane-modified polymer composition in accordance with claim 1. Preferred embodiments of said two-component foamable silane-modified polymer composition are described in the depending claims. In addition, a method for preparing a silane-modified polymer foam attached to a part of assembly in situ, a foam obtainable by said method and particularly suitable applications of said two-component foamable silane-modified polymer composition are protected by further independent claims.

The present invention describes a two-component foamable silane-modified polymer composition comprising:
a component A comprising
   (a-1) at least one silane modified polymer, and
   (a-2) at least one chemical blowing agent selected from the group consisting of alkali metal bicarbonate, alkali metal carbonate, ammonium bicarbonate and ammonium carbonate, and
a component B comprising
   (b-1) water, and
   (b-2) an organic acid.

The solution of the present invention is advantageous in several aspects:
∘ The two-component foamable silane-modified polymer composition of the present invention is easy to use and allows for sealing of components in a very easy and reliable manner.
∘ The two-component foamable silane-modified polymer composition of the present invention has an excellent adhesion to a variety of substrates, in particular on dispersion paints an outstanding adhesion is achieved. At the same time, the foam obtained by curing the two-component foamable silane-modified polymer composition of the present invention can be overpainted with a variety of paints and coatings, which are used in the industrial and craft sector, without observation of any adhesion or separation problems of the coating on the sealant.
∘ The foamed material obtainable by curing the two-component foamable silicone composition exhibits a combination of excellent properties, in particular high impermeability for water, moisture and air; water absorption < 50%, hardness Shore 00 between 20 and 80; a comparable low weight, allowing for the manufacture of lighter materials; a very good compressibility and elasticity; elongation at break > 80%; tensile strength > 100kPa; excellent damping of vibrations and sounds, which renders the foamed material particularly suited for sound damping and vibration damping applications. Compared to commercial product K31-A-9675-5-VP / B-4 the presented SMP based foams show a higher tensile strength and elongation (table 2).
∘ The present invention does not rely on use of isocyanate components or problematic and harmful propellants, such as hydrogen or fluoro-compounds. Therefore, the above-discussed disadvantages and harms of isocyanate technology and of problematic and harmful propellants can be avoided at the best.
∘ By use of the foamed material obtainable by curing the two-component foamable silane-modified polymer composition periodically transmission of mechanical stress can also be prevented. In addition, it can also be avoided that two substrates come into direct contact one another. This is of particularly advantageous for applications in the mobility industry, such as automotive or rail.

The present invention also relates to a method for preparing a silane-modified polymer foam attached to a part of assembly in situ, and a silane-modified polymer foam obtained by said method.

In another aspect, the present invention relates to the use of said two-component foamable silane-modified polymer composition or said silane-modified polymer foam in gasket, sealant or adhesive.

The term "curable composition" is understood to be a substance or mixture of multiple substances, which is curable by physical or chemical measures. In this regard, these chemical or physical measures can be, for example, the supplying of energy in the form of heat, light, or other electromagnetic radiation, but also simply bringing into contact with atmospheric moisture, water, or a reactive component. The composition thereby changes from an original state to a state that has a higher hardness. In preferred embodiments, the curable composition of the present invention is a moisture curable composition.

As used herein, the singular forms "a", "an" and "the" include plural referents unless the context clearly dictates otherwise.

The term "at least one," as used herein, means 1 or more, i.e., 1, 2, 3, 4, 5, 6, 7, 8, 9, or more. With reference to an ingredient, the indication refers to the type of ingredient and not to the absolute number of molecules. "At least one polymer" thus means, for example, at least one type of polymer, i.e., that one type of polymer or a mixture of several different polymers may be used. Together with the weight indication, the indication refers to all compounds of the stated type which are contained in the composition/mixture, i.e., that the composition contains no further compounds of this type besides the stated quantity of the compounds in question.

The terms "comprising", "comprises" and "comprised of" as used herein are synonymous with "including", "includes", "containing" or "contains", and are inclusive or open-ended and do not exclude additional, non-recited members, elements or method steps. If used, the phrase "consisting of" is closed and excludes all additional elements. Further, the phrase "consisting essentially of excludes additional material elements but allows the inclusion of non-material elements that do not substantially change the nature of the invention.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The term "about", as used herein in connection with a numerical value, relates to a variance of ±20%, preferably ±10% of the respective value.

The words "preferred", "preferably", "desirably" and "particularly", and synonyms thereof, are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word "may" is used in a permissive sense - that is meaning to have the potential to - rather than in the mandatory sense.

As used herein, room temperature is 23°C plus or minus 2°C. As used herein, "ambient conditions" means the temperature and pressure of the surroundings in which the composition is located or in which a coating layer or the substrate of said coating layer is located.

The molecular weights given in the present text refer to number average molecular weights (Mₙ), unless otherwise stipulated. All molecular weight data refers to values obtained by gel permeation chromatography (GPC) carried out using Water 2695 HPLC equipped with 3 Polypore columns and using a RI detector at 35 °C. Stabilized Tetrahydrofuran (THF) was used as eluent at 1 mL/min flow rate. The calibration of the device was carried out using polystyrene standards.

As used herein, "polydispersity" refers to a measure of the distribution of molecular mass given in a resin sample. The polydispersity is calculated by dividing the weight average molecular weight (M_{w}) by the number average molecular weight (Mₙ).

For convenience in the description of the process of this invention, unsaturation provided by CH₂=CH-CH₂- terminal groups is referred to as "allyl" unsaturation.

As used herein, "C₁-C alkyl" group refers to a monovalent group that contains 1 to 8 carbon atoms, that is a radical of an alkane and includes linear and branched organic groups. Examples of alkyl groups include but are not limited to: methyl; ethyl; propyl; isopropyl; n-butyl; isobutyl; sec-butyl; tert-butyl; n-pentyl; n-hexyl; n-heptyl; and 2-ethylhexyl. In the present invention, such alkyl groups may be unsubstituted or may be substituted with one or more substituents such as halo, nitro, cyano, amido, amino, sulfonyl, sulfinyl, sulfanyl, sulfoxy, urea, thiourea, sulfamoyl, sulfamide and hydroxy. The halogenated derivatives of the exemplary hydrocarbon radicals listed above might, in particular, be mentioned as examples of suitable substituted alkyl groups. In general, however, a preference for unsubstituted alkyl groups containing from 1 to 6 carbon atoms (C₁-C₆ alkyl) - for example unsubstituted alkyl groups containing from 1 to 4 atoms (C₁-C₄ alkyl) - should be noted.

As used herein, the term "C₂-C₈ alkenyl" group refers to an aliphatic hydrocarbon group which contains 2 to 8 carbon atoms and at least one carbon-carbon double bond, e.g., ethenyl, propenyl, butenyl, or pentenyl and structural isomers thereof such as 1- or 2-propenyl, 1-, 2-, or 3-butenyl, etc. Alkenyl groups can be linear or branched and substituted or unsubstituted. If they are substituted, the substituents are as defined above for alkyl.

As used herein, the term "C₂-C alkynyl" group refers to an aliphatic hydrocarbon group which contains 2 to 8 carbon atoms and at least one carbon-carbon triple bond, e.g., ethynyl (acetylene), propynyl, butynyl, or pentynyl and structural isomers thereof as described above. Alkynyl groups can be linear or branched and substituted or unsubstituted.

The term "C₃-C₁₀ cycloalkyl" is understood to mean a saturated, mono-, bi- or tricyclic hydrocarbon group having from 3 to 10 carbon atoms. Examples of cycloalkyl groups include: cyclopropyl; cyclobutyl; cyclopentyl; cyclohexyl; cycloheptyl; cyclooctyl; adamantane; and, norbornane.

As used herein, an "C₆-C₁₈ aryl" group used alone or as part of a larger moiety - as in "aralkyl group" - refers to optionally substituted, monocyclic, bicyclic and tricyclic ring systems in which the monocyclic ring system is aromatic or at least one of the rings in a bicyclic or tricyclic system is aromatic. The bicyclic and tricyclic ring systems include benzofused 2-3 membered carbocyclic rings. Exemplary aryl groups include: phenyl; indenyl; naphthalenyl; tetrahydronaphthyl, tetrahydroindenyl; tetrahydroanthracenyl; and, anthracenyl. And a preference for phenyl groups may be noted.

As used herein, an "aralkyl" group refers to an alkyl group that is substituted with an aryl group. As example of an aralkyl group is benzyl.

The terms "C₁-C₆₀ alkylene" group and "C₁-C20 alkylene" group refer respectively to divalent groups that contain from 1 to 60 of from 1 to 20 carbon atoms, that are radicals of an alkane and include linear, branched, or cyclic groups, which groups may be substituted or unsubstituted and may optionally be interrupted by at least one heteroatom.

As used herein, the term "alkenylene" group refers to a divalent aliphatic hydrocarbon group having at least one carbon-carbon double bond that is a radical of an alkene. An alkenylene group can be linear or branched and substitutes or unsubstituted.

As used herein, the term "alkynylene" group refers to a divalent aliphatic hydrocar-bon group having at least one carbon-carbon triple bond, that is a radical of an alkyne. An alkynylene group can also have one or more carbon-carbon double bonds. An alkynylene group can be linear or branched and substituted or unsubstituted.

As used herein, the term "arylene" group refers to a divalent group that is a radical of an aryl group. Suitable arylene group includes phenylene, furanylene, piperidylene, and naphthylene.

As used herein, the term "aralkylene" group refers to a divalent group that is a radical of an aralkyl group. An aralkylene can be represented by the formula -R-Ar- where R is an alkylene and Ar is an arylene, i.e., an alkylene is bonded to an arylene. Suitable aralkylene groups includes xylylene and toluenylene.

Where mentioned, the expression "contain at least one heteroatom" means that the main chain or side chain of a residue comprises at least one atom that differs from carbon atom and hydrogen. Preferably the term "heteroatom" refers to nitrogen, oxy-gen, silicon, sulfur, phosphorus, halogens such as Cl, Br, F. Oxygen (O) and nitrogen (N) may be mentioned as typical heteroatoms in the context of the present invention.

As used herein, the term "hydrocarbon residue" includes saturated or unsaturated hydrocarbon residues.

As used herein, the term "heterocyclic compound" refers to a saturated or unsaturated, monocyclic, bicyclic, polycyclic or fused compound containing at least one heteroatom, preferably O, S, N, and/or P, in the ring structure.

As used herein, the term "halogen" refers to fluorine, chlorine, bromine or iodine and correspondingly the term "halide" denotes fluoride, chloride, bromide, or iodide anions.

The term "pseudohalogen" refers to inorganic or organic groups which, when in the form of anions exhibit chemical properties similar to those of the halide ions. Pseudohalogen groups include, although are not exclusive to, azido (N₃), thiocyano (SCN) and cyano (CN).

### (a-1) silane modified polymer

According to the present invention, component A comprises at least one silane modified polymer (a-1). Preferred components A include α-silane and γ-silane type modified polymers. The silane modified polymers generally refer to silane-modified polyether polyols, silane-modified polyester polyols, silane modified polyacrylates, silane-modified polyurethanes, and silane-modified polyether-polyurethanes, i.e., polymers featuring hydrolysable silyl groups at the terminal ends of the respective prepolymer main chain.

According a preferred embodiment of the invention, composition A comprises at least one compound of Formula (I)

Y-[(CR¹₂)_{b}-SiRₐ(OR²)₃₋ₐ]ₓ (I)

wherein, in Formula (I),
Y denotes an x-valent polymer radical bonded via nitrogen, oxygen, sulfur or carbon,
R is independently selected from a monovalent, optionally substituted, SiC-bonded hydrocarbon radical,
R¹ is independently selected from hydrogen or a monovalent, optionally substituted hydrocarbon radical which may be attached to the carbon atom via nitrogen, phosphorus, oxygen, sulfur or carbonyl group, R² is independently selected from hydrogen or a monovalent, optionally substituted hydrocarbon radical,
x is an integer from 1 to 10, preferably 1, 2 or 3, especially preferably 1 or 2,
a is independently selected from 0, 1 and 2, preferably 0 and 1, and
b is independently selected from an integer from 1 to 10, preferably 1, 3 and 4, particularly preferably 1 and 3, in particular 1.

Examples of radicals R are alkyl radicals, such as the methyl, ethyl, n-propyl, iso-propyl, 1-n-butyl, 2-n-butyl, iso-butyl, tert. pentyl radical; hexyl radicals, such as the n-hexyl radical; heptyl radicals, such as the n-heptyl radical; octyl radicals, such as the n-octyl radical, iso-octyl radicals and the 2,2,4-trimethylpentyl radical; nonyl radicals, such as the n-nonyl radical; decyl radicals, such as the n-decyl radical; dodecyl radicals, such as the n-dodecyl radical; octadecyl radicals, such as the n-octadecyl radical; cycloalkyl radicals, such as cyclopentyl, cyclohexyl, cycloheptyl and methylcyclohexyl radicals; alkenyl radicals, such as vinyl, 1-propenyl and 2-propenyl radicals; aryl radicals, such as the phenyl, 2-propenyl and 2-propenyl radicals; and phenyl-, naphthyl, anthryl and phenanthryl radicals; alkaryl radicals, such as o-, m-, p-tolyl radicals, xylyl radicals and ethylphenyl radicals; and aralkyl radicals, such as the benzyl radical, the α- and the β-phenylethyl radical.

The R radical is preferably a monovalent hydrocarbon radical having 1 to 6 carbon atoms which is optionally substituted by halogen atoms, particularly preferably an alkyl radical having 1 or 2 carbon atoms, in particular methyl radical.

Examples of radicals R¹ are hydrogen atoms, the radicals indicated for R and optionally substituted hydrocarbon radicals bonded to the carbon atom via nitrogen, phosphorus, oxygen, sulfur, carbon or carbonyl groups.

Preferably, R¹ is hydrogen and hydrocarbon radicals with 1 to 20 carbon atoms, especially hydrogen.

Examples of R² are hydrogen or the examples given for R.

Preferably, the R² radicals are hydrogen or alkyl radicals containing 1 to 10 carbon atoms, optionally substituted by halogen atoms, particularly preferably alkyl radicals containing 1 to 4 carbon atoms, in particular the methyl and ethyl radicals.

For the purposes of the present invention, polymers on which the polymer residue Y is based, are all polymers in which at least 50%, preferably at least 70%, particularly preferably at least 90%, of all bonds in the main chain are carbon-carbon, carbon-nitrogen or carbon-oxygen bonds. Polymer residues Y are preferably organic polymer residues which are polyoxyalkylenes, such as polyoxyethylene, polyoxypropylene, polyoxybutylene, polyoxytetramethylene, polyoxyethylenepolyoxypropylene copolymer and polyoxypropylene-polyoxybutylene copolymer as polymer chain; hydrocarbon polymers, such as polyisobutylene, polyethylene or polypropylene and copolymers of polyisobutylene with isoprene; polyisoprenes; polyurethanes; polyesters; polyamides; polyacrylates; polymethacrylates; and polycarbonates and which preferably are bonded to each group -[(CR¹₂)_{b}-SiRₐ(OR²)₃₋ₐ]ₓ via -O-C(=O)-NH- , -NH-C(=O)O-, -NH-C(=O)-NH-, -NR'-C(-O)-NH- , NH-C(=O)-NR'-, - NH-C(=O)-, -C(=O)-NH-, -C(=O)-O-, -O-C(=O)-, -O-C(=O)-O-, -S-C(=O)-NH-, -NH-C(=O)-S-, -C(=O)-S-, -S-C(=O)-, -S-C(=O)-S-, -C(-O), -S-, -O- or -NR'-, wherein R' may be the same or different and has a meaning specified for R, or represents a group -CH(COOR")-CH₂-COOR", wherein R" can be the same or different and has the meaning specified for R. Examples of radicals R' include cyclohexyl-, cyclopentyl-, n- and iso-propyl-, n-, iso- and t-butyl-, the various sterioisomers of the pentyl radical, hexyl radical or heptyl radical and the phenyl radical. R' is preferably a group - CH(COOR")-CH₂-COOR" or an optionally substituted hydrocarbon radical having 1 to 20 carbon atoms, particularly preferably a linear, branched or cyclic alkyl group having 1 to 20 carbon atoms or an aryl group having 6 to 20 carbon atoms, which is optionally substituted by halogen atoms; R" is preferably an alkyl group having 1 to 10 carbon atoms, particularly preferably a methyl, ethyl or propyl radical.

In Formula (I), the radical Y preferably denotes polyurethane radicals and polyoxyalkylene radicals, especially polyoxypropylene-containing polyurethane radicals or polyoxypropylene radicals.

Compounds of Formula (I) can have the groups -[(CR¹₂)_{b}-SiRₐ(OR²)₃₋ₐ]ₓ bound in the manner described at any desired position in the polymer, such as located at the terminal ends or located in between the terminal ends, i.e. as side groups of the polymer main chain, particularly preferably at the terminal ends of the polymer chain.

The end groups of the compounds according to Formula (I) are preferably those of the Formula (II) or Formula (III)

-O-C(=O)-NH-(CR¹₂)_{b}-SiRₐ(OR²)₃₋ₐ (II)

and

-NH-C(=O)-NR'-(CR¹₂)_{b}-SiRₐ(OR²)₃₋ₐ (III),

wherein the residues and indices are as above defined.

Particularly, a compound according to Formula (I) may denote silane-terminated polyethers and silane-terminated polyurethanes, in particular silane-terminated polypropylene glycols and silane-terminated polyurethanes each having dimethoxymethylsilyl, trimethoxysilyl, diethoxymethylsilyl or triethoxysilyl end groups bonded via -O-C(=O)-NH-(CR¹₂)_{b}- groups or -NH-C(=O)-NR'-(CR¹₂)_{b}-groups, wherein R', R¹ and b are as defined above.

The average molecular weights Mₙ of the compounds according to Formula (I) are preferably at least 400 g/mol, particularly preferably at least 600 g/mol, in particular at least 800 g/mol and preferably at most 30 000 g/mol, particularly preferably at most 19 000 g/mol, in particular at most 13 000 g/mol.

The viscosity of compounds according to Formula (I) is preferably at least 0.2 Pas, preferably at least 1 Pas, particularly preferably at least 5 Pas, and preferably at most 1000 Pas, preferably at most 700 Pas, each measured at 20°C.

According to various preferred embodiments, the component A comprises at least one polymer having at least one silane-functional group of the Formula (IV)

-Xₒ-R³-Si(R⁴)ₖ(R⁵)₃₋ₖ (IV),

wherein
X is a divalent linking group containing at least one heteroatom;
R³ is selected from divalent hydrocarbon residues having 1 to 12 carbon atoms;
each R⁴ is, independently of one another, selected from a hydrocarbon radical containing 1 to 20 carbon atoms and each R⁵ is, independently of one another, selected from a hydroxyl group or a hydrolysable group, wherein R⁴ and R⁵ are substituents directly bound with the Si atom or the two of the substituents R⁴ and R⁵ form a ring together with the Si atom to which they are bound;
k is 0, 1, or 2; and
o is 0 or 1.

In this context, the divalent bonding group (linking group) X comprising at least one heteroatom is understood to be a divalent chemical group which links the polymer backbone of the polymer with the residue R³ of the Formula (IV).

In various embodiments, the divalent linking group X in the Formula (IV) is selected from -O-, -S-, - N(R")-, -R‴-O-, a substituted or unsubstituted amide, carbamate, urethane, urea, imino, carboxylate, carbamoyl, amidino, carbonate, sulfonate or sulfinate group, wherein R" is a hydrogen or a linear or branched and substituted or unsubstituted hydrocarbon residue having 1 to 12 carbon atoms; and R‴ is a linear or branched and substituted or unsubstituted hydrocarbon residue having 1 to 12 carbon atoms. The term "substituted" in relation to these groups means that a hydrogen atom present in these groups may be replaced by a non-hydrogen moiety, such as alkyl or aryl groups, preferably C₁₋₁₂ alkyl or C₆₋₁₄ aryl groups.

In preferred embodiments, the linking group X is urethane or urea group, more preferably urethane group. Urethane group can be formed, for example, either when the polymer backbone comprises terminal hydroxy groups and isocyanatosilanes are used as a further component, or conversely when a polymer having terminal isocyanate groups is reacted with an alkoxysilane comprising terminal hydroxy groups. Similarly, urea group can be obtained if a terminal primary or secondary amino group - either on the silane or on the polymer - is used, which reacts with a terminal isocyanate group that is present in the respective reactant. This means that either an aminosilane is reacted with a polymer having terminal isocyanate groups or a polymer that is terminally substituted with an amino group is reacted with an isocyanatosilane. Urethane and urea groups advantageously increase the strength of the polymer chains and of the overall crosslinked polymer.

In preferred embodiments, the linking group X is selected from the group consisting of -O-C(=O)-N(R")-, -N(R")-C(=O)O-, -N(R")-C(=O)-N(R")-, -N(R")-C(=O)-, -C(=O)-N(R")-, -C(=O)-O-, -O-C(=O)-, -O-C(=O)-O-, -S-C(=O)-N(R")-, -N(R")-C(=O)-S- , -C(=O)-S-, -S-C(=O)-, -S-C(=O)-S- , -C(=O)-, -S-, -O-, - NR"-, and -R‴-O-, wherein R" and R‴ are as defined above. In more preferred embodiments, the linking group X is selected from -O-C(=O)-N(R")-, -N(R")-C(=O)O-, -N(R")-C(=O)-N(R")-, -S-, - O-, -N(R")-, or -R‴-O-, wherein R" and R‴ are as defined above. In particularly preferred embodiments, the linking group X is selected from -O-C(=O)-N(R")-, -N(R")-C(=O)-N(R")-, -O-, or - R‴-O-, wherein R" and R‴ are as defined above, more preferably -O-C(=O)-NH- or -NH-C(=O)-NH-, most preferably -O-C(=O)-NH-.

The index "o" corresponds to 0 (zero) or 1, i.e., the linking group X links the polymer backbone with the residue R³ (o = 1) or the polymer backbone is bound or linked directly with the residue R³ (o = 0). In preferred embodiments, o is 1.

The residue R³ is a divalent hydrocarbon residue having 1 to 12 carbon atoms. The hydrocarbon residue can be a linear, branched or cyclic alkylene residue and can be substituted or unsubstituted. The hydrocarbon residue can be saturated or unsaturated. In preferred embodiments, R³ is a divalent hydrocarbon residue having 1 to 6 carbon atoms. The curing rate of the composition can be influenced by the length of the hydrocarbon residues which form one of the binding links or the binding link between polymer backbone and silyl residue. Particularly preferably, R³ is a methylene, ethylene or n-propylene, in particular a methylene or n-propylene.

Alkoxysilane-functional compounds having a methylene group as binding link to the polymer backbone - so-called "α silanes" - have a particularly high reactivity of the silyl group.

In general, a lengthening of the binding hydrocarbon chain leads to reduced reactivity of the polymers. In particular, "γ silanes" - which comprise the unbranched propylene residue as binding link - have a balanced ratio between necessary reactivity (acceptable curing times) and delayed curing (open assembly time, possibility of corrections after bonding).

R⁴ and R⁵ are substituents directly bound with the Si atom or the two of the substituents R⁴ and R⁵ can form a ring together with the Si atom to which they are bound. In preferred embodiments, R⁴ and R⁵ are the substituents directly bound with the Si atom.

Each R⁴ in the Formula (IV) is, independently of one another, selected from a hydrocarbon radical containing 1 to 20 carbon atoms, preferably C₁ to C₈ alkyl groups, more preferably a methyl or an ethyl.

Each R⁵ in the Formula (IV) is, independently of one another, selected from a hydroxyl group or a hydrolysable group, preferably C₁ to C₈ alkoxy groups, or C₁ to C₈ acyloxy groups.

In preferred embodiments, each R₅ is, independently of one another, selected from C₁ to C₈ alkoxy groups, in particular methoxy, ethoxy, i-propyloxy or i-butyloxy group. When k is 0 or 1, combinations of more than one group are also possible. However, acyloxy groups, such as an acetoxy group -O-CO-CH₃, can also be used as hydrolyzable groups.

In preferred embodiments, k is 0 or 1.

In particularly preferable embodiments, the silyl group, i.e., -Si(R⁴)k(R⁵)₃₋ₖ, is selected from alkyldialkoxysilyl or trialkoxysilyl, preferably selected from methyldimethoxysilyl, ethyldiethoxysilyl, trimethoxysilyl, or triethoxysilyl, most preferably methyldimethoxysilyl or trimethoxysilyl. Alkoxy groups are advantageous, since no substances which irritate mucous membranes are released during the curing of compositions comprising alkoxy groups. The alcohols formed by hydrolysis of the residues are harmless in the quantities released, and evaporate.

In general, polymers comprising di- or trialkoxysilyl groups have highly reactive linking points which permit rapid curing, high degrees of crosslinking and thus good final strengths. The particular advantage of dialkoxysilyl groups lies in the fact that, after curing, the corresponding compositions are more elastic, softer and more flexible than systems comprising trialkoxysilyl groups. They are therefore suitable in particular for use as sealants. In addition, they split off even less alcohol during curing and are therefore of particular interest when the quantity of alcohol released is to be reduced.

With trialkoxysilyl groups, on the other hand, a higher degree of crosslinking can be achieved, which is particularly advantageous if a harder, stronger material is desired after curing. In addition, trialkoxysilyl groups are more reactive and therefore crosslink more rapidly, thus reducing the quantity of catalyst required, and they have advantages in "cold flow" - the dimensional stability of a corresponding foam under the influence of force and possibly temperature.

Methoxy and ethoxy groups as comparatively small hydrolyzable groups with low steric bulk are very reactive and thus permit a rapid cure, even with low use of catalyst. They are therefore of particular interest for systems in which rapid curing is desirable.

Interesting configuration possibilities are also opened up by combinations of the two groups. If, for example, methoxy is selected for one of the R⁵ and ethoxy for the other R^{b} within the same alkoxysilyl group, the desired reactivity of the silyl groups can be adjusted particularly finely if silyl groups carrying exclusively methoxy groups are deemed too reactive and silyl groups carrying ethoxy groups not reactive enough for the intended use.

In addition to methoxy and ethoxy groups, it is of course also possible to use larger residues as hydrolyzable groups, which by nature exhibit lower reactivity. This is of particular interest if delayed curing is also to be achieved by means of the configuration of the alkoxy groups.

The silane-functional group of Formula (IV) can be a lateral group within the polymer chain of the respective polymer or a terminal group of the respective polymer. In preferred embodiments, the silane-functional group of Formula (IV) is a terminal group of the polymer.

In preferred embodiments, the polymer has at least two silane-functional groups of Formula (IV). In this case, the polymer can have at least one lateral silane-functional group of Formula (IV) and at least one terminal silane-functional group of Formula (IV); or, at least two lateral silane-functional groups of Formula (IV); or, at least two terminal silane-functional groups of Formula (IV).

In particularly preferred embodiments, the polymer has at least two terminal silane-functional groups of Formula (IV). Then, each polymer chain comprises at least two linking points at which the condensation of the polymers can be completed, splitting off the hydrolyzed residues in the presence of atmospheric moisture. In this way, regular and rapid crosslinkability is achieved so that bonds with good strengths can be obtained. In addition, by means of the quantity and the structure of the hydrolyzable groups - for example by using di- or trialkoxysilyl groups, methoxy groups or longer residues - the configuration of the network that can be achieved as a long-chain system (thermoplastics), relatively wide-mesh three-dimensional network (elastomers) or highly crosslinked system (thermosets) can be controlled, so that inter alia the elasticity, flexibility and heat resistance of the finished crosslinked compositions can be influenced in this way.

In preferred embodiments, the polymer backbone of the polymer is selected from polyethers, poly(meth)acrylic acid ester, polyesters, polyurethanes, poly-α-olefins, more preferably polyethers or polyurethanes, or copolymers of at least two of said polymers such as polyether and poly(meth)acrylic acid ester copolymers.

A "polyether", "polyoxyalkylene", or "polyalkylene glycol", as used interchangeably herein, is understood to be a polymer in which the organic repeating units comprise ether functionalities C-O-C in the main chain. Examples for such polymers are polypropylene glycol and polyethylene glycol and copolymers thereof. Polymers having lateral ether groups, such as cellulose ethers, starch ethers and vinyl ether polymers, as well as polyacetals such as polyoxymethylene (POM) are not included in the polyethers.

A "poly(meth)acrylic acid ester" is understood to be a polymer based on (meth)acrylic acid esters, which therefore has as a repeating unit the structural motif -CH₂-CR'(COOR")-, where R' denotes a hydrogen atom (acrylic acid ester) or a methyl group (methacrylic acid ester) and R" denotes linear alkyl residues, branched alkyl residues, cyclic alkyl residues and/or alkyl residues comprising functional substituents, for example methyl, ethyl, isopropyl, cyclohexyl, 2-ethylhexyl or 2-hydroxyethyl residues.

A "polyurethane" is understood to be a polymer which has at least two urethane groups -NH-CO-O-in the main chain.

In particularly preferred embodiments, the silane-modified polymer has a polyether backbone. Polyethers have a flexible and elastic structure, with which compositions having excellent elastic properties can be produced. Polyethers are not only flexible in their backbone, but at the same time strong. Thus, for example, polyethers are not attacked or decomposed by water and bacteria, in contrast to, e.g., polyesters, for example.

The number average molecular weight Mₙ of the polyether on which the polymer is based is for preference 500 to 100,000 g/mol (daltons), more preferably 500 to 50,000, particularly preferably 1,000 to 30,000 and in particular 2,000 to 20,000 g/mol, most preferably 8,000 to 20,000 g/mol. Number average molecular weights of at least 500 g/mol are advantageous for the polyethers of the present invention since the corresponding compositions have a balanced ratio of viscosity (ease of processing), strength and elasticity.

The silane-modified polymers discussed above are commercially available products or can be synthesized using known methods and processes, such as addition reactions, e.g. hydrosilylation,

Michael addition, Diels-Alder addition or reactions between isocyanate-functional compounds with compounds containing isocyanate-active groups. In this regard, reference may be made to, for instance EP1535940B1 and EP1896523B1. Alternative synthetic routes are further disclosed in WO 2013/026654 A1.

Silane modified polymers suitable for employment in the context of the present invention include, without limitation, polymers and prepolymers commercially available under the brand name GENIOSIL^{®}, specific examples suitable for employment according to the present invention are the α-silane polyether type prepolymers GENIOSIL^{®} STPE-E10, -E15, -E30 and -E35; the α-silane polyether-polyurethane type prepolymers of the GENIOSIL^{®} XB series, an example of which is GENIOSIL^{®} XB 502; GENIOSIL^{®} XT; GENIOSIL^{®} XM; and GENIOSIL^{®} WP. Moreover, examples of curable polypropylene oxide resins include various known reactive polypropylene oxide resins, such as Kaneka MS polymer available from Kaneka Corporation.

The amount of one or more silane modified prepolymers, i.e. one type of silane modified prepolymer or different kinds of silane modified prepolymers, i.e. two or more different kinds of silane modified prepolymers, as herein defined above, in component A is typically in the range of about 10 to about 95 wt.-%, preferably in the range of about 10 to about 90 wt.-%, even more preferably in the range of about 15 to about 85 wt.-%, for instance about 15, 16, 17, 18,19, 20, 21, 22, 23, 24, 25, 26, 27, 28, 29, 30, 31, 32, 33, 34, 35, 36, 37, 38, 39, 40, 45, 50, 55, 60, 65, 70, 75, 80 or 85 wt.-%, based on the total weight of component A.

In the context of the aforementioned foamable compositions, it will be readily recognized that, in addition to generally fast curing rates, a prominent advantage of α-silane type curable resin compositions is that neither tin catalysts nor strong acids or bases need be included for curing purposes. Thus, according to various documents, component A is an α-silane type curable resin composition, i.e. is a curable resin composition comprising at least one α-silane type prepolymer, as herein defined above, preferably in amounts of about 10 to about 95 wt.-%, more preferably about 10 to about 90 wt.-%, such as about 10, 11, 12, 13, 14, 15, 16, 17, 18, 19, 20, 25, 30, 35, 40, 45, 50, 55, 60, 65, 70, 75, 80, 85 or 90 wt.-%, based on the total weight of component A.

A typical component A further comprises, in addition to the aforementioned silane modified polymer component, further ingredients generally known in the art for the purpose of inclusion in curable, particularly moisture curable compositions. A non-exhaustive list of further ingredients to be optionally included comprises further reactive silane or siloxane compounds, fillers, catalysts, adhesion promotors, water scavengers, reactive and non-reactive diluents, solvents, plasticizers, rheology modifiers, preservatives, UV stabilizers, pigments and colorants.

Suitable compositions A can be used both in pure form and in the form of a solution or emulsion or suspension.

Suitable solvents may be selected from ethers (e.g. diethyl ether, methyl-t-butyl ether, ether derivatives of glycol, THF), esters (e.g. ethyl acetate, butyl acetate, glycol ester), hydrocarbons (e.g. (e.g. pentane, cyclopentane, hexane, cyclohexane, heptane, octane or also longer-chained branched and unbranched alkanes), ketones (e.g. acetone, methyl ethyl ketone), aromatics (e.g. acetone, methyl ethyl ketone), aromatics (e.g. ethyl acetate, butyl acetate, glycol esters) (e.g. toluene, xylene, ethylbenzene, chlorobenzene) and alcohols (e.g. methanol, ethanol, glycol, propanol, isopropanol, glycerine, butanol, iso-butanol, t-butanol).

However, compositions A that are free of organic solvents may be preferred due to ecological and/or health concerns. In various embodiments, composition A is thus substantially free of organic solvent.

In the context of the present invention, the term "substantially free" refers to compositions comprising less than about 1 wt.-%, preferably less than about 0.5 wt.-%, more preferably less than about 0.1 wt.% of the respective ingredient. For instance, a composition substantially free of organic solvent comprises, in the context of the present invention, less than about 1 wt.-% organic solvent.

Another preferred type of component A, is a silane-modified polymer resin type curable composition, particularly moisture curable silane-modified polymer resin composition. Both 1K and 2K silane-modified polymer resin type curable compositions are generally known in the art, both of which may find application in the context of the present invention. Non-limiting examples of silane-modified polymer resin type curable compositions are silane-modified polymer resin compositions comprising at least one compound containing units of Formula (V)

R⁶_{c}(R⁷O)_{d}R⁸ₑSiO(_{4-c-d-e)/2} (V)

wherein, in Formula (V)
R⁶ is independently selected from hydrogen, a monovalent, SiC-bonded, optionally substituted aliphatic hydrocarbon radical or a divalent, optionally substituted aliphatic hydrocarbon radical, which bridges two units of the Formula (V),
R⁷ is independently selected from hydrogen or a monovalent, optionally substituted hydrocarbon radical,
R⁸ is independently selected from a monovalent, SiC-bound, optionally substituted aromatic hydrocarbon residue,
c is 0, 1, 2 or 3,
d is 0, 1, 2 or 3, preferably 0, 1 or 2, particularly preferably 0 or 1, and
e is 0, 1 or 2, preferably 0 or 1,
with the proviso that the sum of c+d+e is less than or equal to 3, wherein in at least 40% of the units of Formula (V) the sum c+e is preferably equal to 0 or 1.

In preferred embodiments, a compound containing units of Formula (V) contains units of Formula (V) in amounts of about 80 wt.-%, preferably about 85, more preferably at least about 90 wt.-%. Even more preferably, a compound containing units of Formula (V) consists of units of Formula (V).

Examples of radicals R are alkyl radicals, such as the methyl, ethyl, n-propyl, iso-propyl, 1-n-butyl, 2-n-butyl, iso-butyl, tert.-pentyl radical; hexyl radicals, such as the n-hexyl radical; heptyl radicals, such as the n-heptyl radical; octyl radicals, such as the n-octyl radical, iso-octyl radicals and the 2,2, - trimethylpentyl radical; nonyl radicals, such as the n-nonyl radical; decyl radicals, such as the n-decyl radical; dodecyl radicals, such as the n-dodecyl radical; octadecyl radicals, such as the n-octadecyl radical; cycloalkyl radicals, such as cyclopentyl, cyclohexyl, cycloheptyl and methylcyclohexyl radicals; alkenyl radicals, such as vinyl, 1-propenyl and 2-propenyl radicals; aryl radicals, such as the phenyl, 2-propenyl and 2-propenyl radicals; and phenyl-, naphthyl, anthryl and phenanthryl radicals; alkaryl radicals, such as o-, m-, p-tolyl radicals, xylyl radicals and ethylphenyl radicals; and aralkyl radicals, such as the benzyl radical, the α- and the β-phenylethyl radical.

The R radical is preferably a monovalent hydrocarbon radical having 1 to 6 carbon atoms which is optionally substituted by halogen atoms, particularly preferably an alkyl radical having 1 or 2 carbon atoms, in particular methyl radical.

Examples of residues R⁶ are the aliphatic examples given above for R. However, R⁶ can also be a divalent aliphatic radical, which links two silyl groups of Formula (V), such as alkylene radicals having 1 to 10 carbon atoms, such as methylene, ethylene, propylene or butylene radicals. A particularly common example of a divalent aliphatic radical is the ethylene radical. However, the radical R⁶ is preferably a monovalent SiC-bonded aliphatic hydrocarbon radical with 1 to 18 carbon atoms, which may be substituted with halogen atoms, particularly preferably aliphatic hydrocarbon radicals with 1 to 6 carbon atoms, especially the ethyl radical.

Examples for residue R⁷ are hydrogen tom or the examples given for residue R. Preferably, the R⁷ radical is a hydrogen atom or an alkyl radical with 1 to 10 carbon atoms that is optionally substituted with halogen atoms, particularly preferably an alkyl radical with 1 to 4 carbon atoms, especially the methyl and ethyl radical.

Examples of radicals R⁸ are the aromatic radicals indicated above for R. Particularly, the R⁸ radicals are SiC-bonded aromatic hydrocarbon radicals with 1 to 18 carbon atoms, optionally substituted with halogen atoms, such as ethylphenyl, tolyl, xylyl, chlorophenyl, naphthyl or styryl radicals, particularly preferably the phenyl radical.

Preferred are silane-modified polymer resins in which at least 90% of all R⁶ radicals are methyl radicals, at least 90% of all R⁷ radicals are methyl, ethyl, propyl or isopropyl radicals and at least 90% of all R⁸ radicals are phenyl radicals.

Particularly, silane-modified polymer resins may be used, which have at least 20%, particularly preferably at least 40%, of units of the Formula (V) in which c is equal to 0, in each case based on the total number of units of Formula (V).

Further, silane-modified polymer resins may be used, which, in each case based on the total number of units of Formula (V), have at least 10%, particularly preferably at least 20%, and at most 80%, particularly preferably at most 60%, of units of Formula (V) in which c is 2.

Silane-modified polymer resins are preferably used which, in each case based on the total number of units of Formula (V), contain at least 80%, particularly preferably at least 95%, of units of Formula (V) in which d is 1 or 0.

Further preferred silane-modified polymer resins are those, which, in each case based on the total number of units of Formula (V), contain at least 60%, particularly preferably at least 70%, preferably at most 99%, particularly preferably at most 97%, of units of Formula (V), in which d is 0.

Further preferred examples of silane-modified polymer resins are those, which, in each case based on the total number of units of Formula (V), have at least 1%, preferably at least 10%, in particular at least 20%, of units of Formula (V), in which e is not equal to 0. Furthermore, silane-modified polymer resins may be used, which exclusively contain units of Formula (V), in which e is not equal to 0, but particularly preferably at least 10%, particularly preferably at least 20%, preferably at most 80%, particularly preferably at most 60%, of the units of Formula (V) have e equal 0.

Further examples of the above defined silane-modified polymer resins are those, which, in each case based on the total number of units of Formula (V), have at least 20%, particularly preferably at least 40%, of units of Formula (V), in which e is 1. Silane-modified polymer resins may be used, which exclusively comprise units of Formula (V), in which e equals 1, but particularly preferably at least 10%, particularly preferably at least 20%, preferably at most 80%, particularly preferably at most 60%, of the units of Formula (V) have e equal 0.

Further examples of silane-modified polymer resins are those, which, based on the total number of units of Formula (V), have at least 50% of units of Formula (V), in which the sum of c+e is 0 or 1.

Further examples of the above defined silane-modified polymer resins are those, which, in each case based on the total number of units of the Formula (V), have at least 20%, particularly preferably at least 40%, of units of Formula (V), in which e is 1 and c is 0. Preferably, at most 70%, particularly preferably at most 40% of all units of Formula (V) have d not equal 0.

Furthermore, those silane-modified polymer resins may be advantageously used, which, in each case based on the total number of units of Formula (V), have at least 20%, particularly preferably at least 40%, of units of Formula (V), in which e denotes and c equals 0, and which additionally have at least 1%, preferably at least 10%, of units of Formula (V), wherein c denotes 1 or 2, preferably 2, and e equals 0. Particularly at most 70%, more particularly preferably at most 40% of all units of Formula (V) have d not equal 0 and at least 1% of all units of Formula (V) have d equal 0.

Suitable silane-modified polymer resins can be used both in pure form and in the form of a solution, emulsion or suspension.

Suitable solvents may be selected from ethers (e.g. diethyl ether, methyl-t-butyl ether, ether derivatives of glycol, THF), esters (e.g. ethyl acetate, butyl acetate, glycol ester), hydrocarbons (e.g. (e.g. pentane, cyclopentane, hexane, cyclohexane, heptane, octane or also longer-chained branched and unbranched alkanes), ketones (e.g. acetone, methyl ethyl ketone), aromatics (e.g. acetone, methyl ethyl ketone), aromatics (e.g. ethyl acetate, butyl acetate, glycol esters) (e.g. toluene, xylene, ethylbenzene, chlorobenzene) and alcohols (e.g. methanol, ethanol, glycol, propanol, isopropanol, glycerine, butanol, iso-butanol, t-butanol).

However, silane-modified polymer resins that are free of organic solvents may be preferred due to ecological and/or health concerns.

The above-described silane-modified polymer resins are commercially available products, but can also be produced by methods commonly used in silicon chemistry. Suitable for employment in the context of the present invention are, for instance but without limitation, silane-modified polymer resin products commercially available under the brand name SILRES^{®} by Wacker, examples of which include liquid resin types such as SILRES^{®} REN 50, 60, 70-M, and 80, SILRES^{®} KX, SILRES^{®} HK46, and SILRES^{®} MSE 100; emulsion type resins such as SILRES ^{®} MP 50 E and SILRES^{®} MPF 52 E; organofunctional polysiloxanes such as SILRES^{®} HP 2000; and further intermediates such as SILRES^{®} SY 300 or SILRES^{®} IC232; and solids such as SILRES^{®} 603 and SILRES^{®} 604.

The amount of one or more silane modified polymer, i.e., one type of silane modified polymer or different kinds of silane modified polymers, i.e. two or more different kinds of silane modified polymers, as herein defined above, in composition A is typically in the range of about 10 to about 95 wt.-%, preferably in the range of about 10 to about 90 wt.-%, even more preferably in the range of about 15 to about 85 wt.-%, for instance about 15, 16, 17, 18, 19, 20, 21, 22, 23, 24, 25, 26, 27, 28, 29, 30,31, 32, 33, 34, 35, 36, 37, 38, 39, 40, 45, 50, 55, 60, 65, 70, 75, 80 or 85 wt.-%, based on the total weight of the curable composition.

A typical composition A further comprises, in addition to the aforementioned silane-modified polymer resin component, further ingredients generally known in the art for the purpose of inclusion in such curable, particularly moisture curable compositions. A non-exhaustive list of further ingredients to be optionally included comprises reactive silane or siloxane compounds, fillers, catalysts, adhesion promotors, water scavengers, reactive and non-reactive diluents, solvents, plasticizers, rheology modifiers, preservatives, UV stabilizers, pigments and colorants.

It may be noted that also such compositions A comprising both a silane modified polymer component and a silane-modified polymer resin component may be advantageously applied in the context of the present invention.

According to various embodiments, the at least one curable composition characterized in that the at least one curable composition comprises at least one compound of Formula (I)

Y-[(CR¹₂)_{b}-SiRₐ(OR²)₃₋ₐ]ₓ (I)

wherein, in Formula (I),
Y denotes an x-valent polymer radical bonded via nitrogen, oxygen, sulfur or carbon,
R is independently selected from a monovalent, optionally substituted, SiC-bonded hydrocarbon radical,
R¹ is independently selected from hydrogen or a monovalent, optionally substituted hydrocarbon radical which may be attached to the carbon atom via nitrogen, phosphorus, oxygen, sulfur or carbonyl group, R² is independently selected from hydrogen or a monovalent, optionally substituted hydrocarbon radical,
x is an integer from 1 to 10, preferably 1, 2 or 3, especially preferably 1 or 2,
a is independently selected from 0, 1 and 2, preferably 0 and 1, and
b is independently selected from an integer from 1 to 10, preferably 1, 3 and 4, particularly preferably 1 and 3, in particular 1;
   and/or
at least one compound containing units of the following Formula (V)

   R⁶_{c}(R⁷O)_{d}R⁸ₑSiO(_{4-c-d-e)/2} (V)

   wherein, in Formula (V)
R⁶ is independently selected from hydrogen, a monovalent, SiC-bonded, optionally substituted aliphatic hydrocarbon radical or a divalent, optionally substituted aliphatic hydrocarbon radical, which bridges two units of the Formula (V),
R⁷ is independently selected from hydrogen or a monovalent, optionally substituted hydrocarbon radical,
R⁸ is independently selected from a monovalent, SiC-bound, optionally substituted aromatic hydrocarbon residue,
c is 0, 1, 2 or 3,
d is 0, 1, 2 or 3, preferably 0, 1 or 2, particularly preferably 0 or 1, and
e is 0, 1 or 2, preferably 0 or 1,
with the proviso that the sum of c+d+e is less than or equal to 3, wherein in at least 40% of the units of Formula (V) the sum c+e is preferably equal to 0 or 1. In various embodiments, the at least one curable composition comprises at least one compound of Formula (I) defined above.

In various embodiments, component A, as herein described above, does not comprise an epoxy component. In various embodiments, component A is substantially free of epoxy components.

In various embodiments, component A, as herein described above, does not comprise a photo-curable polymer component. In various embodiments, component A is substantially free of photo-curable components.

In various embodiments of the present invention, component A comprises just one silane modified polymer, as herein described above. However, component A may also comprise of two or more silane modified polymers.

### (a-2) Chemical blowing agent

The component A also comprises at least one chemical blowing agent selected from the group consisting of alkali metal bicarbonate, alkali metal carbonate, ammonium bicarbonate and ammonium carbonate. Preferably, at least one chemical blowing agent selected from the group consisting of LiHCOs, Li₂CO₃, NaHCOs, Na₂CO₃, KHCOs, and K₂CO₃, preferably from the group consisting of NaHCOs, Na₂CO₃, more preferably from the group consisting of NaHCOs.

The carbonate or hydroxycarbonate group of the chemical blowing agent can react with the organic acid in the component B to produce carbon dioxide gas and hence create the cells in the foam.

### (b-1) Water

Therefore, the component B comprises water.

### (b-2) Organic acid

Component B also comprises at least one organic acid, preferably having a pKₐ of 1.0 to 8.0, more preferably having a pKₐ of 1.3 to 6.0. Suitable exemplarily acids are preferably selected from acetic acid, para-toluenesulfonic acid, adipic acid, ascorbic acid, benzenesulfonic acid, camphorsulfonic acid, malic acid, maleic acid, glyoxylic acid, citric acid, formic acid, pyruvic acid, tartaric acid, phthalic acid, acetylsalicylic acid, salicylic acid, lactic acid, dihydroxy fumaric acid, mandelic acid, malonic acid, glycolic acid and oxalic acid or combinations thereof, more preferably the at least one organic acid comprises adipic acid or ascorbic acid or a combination thereof, more preferred is ascorbic acid.

### (a-3) plasticizer

According to preferred embodiments, component A comprises plasticizer.

Examples of optionally employed plasticizers (a-3) are dimethylpolysiloxanes which are liquid at room temperature under a pressure of 1013 hPa and are terminated with trimethylsiloxy groups, in particular having viscosities at 20° C. in the range between 20 and 5,000 mPas; organopolysiloxanes which are liquid at room temperature under a pressure of 1,013 hPa and consist substantially of SiO_{3/2}, SiO_{2/2}, and SiO_{1/2} units, referred to as T, D, and M units; and also high-boiling hydrocarbons, such as, for example, paraffin oils or mineral oils consisting substantially of naphthenic and paraffinic units.

The optionally employed plasticizer (a-3) preferably comprises linear polydimethylsiloxanes having trimethylsilyl end groups.

Component A can furthermore contain hydrophilic plasticizers. These are used to improve the moisture absorption and thereby to improve the reactivity at low temperatures. Suitable as plasticizers are, for example, esters of abietic acid, adipic acid esters, azelaic acid esters, benzoic acid esters, butyric acid esters, acetic acid esters, esters of higher fatty acids having approximately 8 to approximately 44 carbon atoms, epoxidized fatty acids, fatty acid esters and fats, glycolic acid esters, phosphoric acid esters, phthalic acid esters, linear or branched alcohols containing 1 to 12 carbon atoms, propionic acid esters, sebacic acid esters, sulfonic acid esters, thiobutyric acid esters, trimellitic acid esters, citric acid esters, and esters based on nitrocellulose and polyvinyl acetate, as well as mixtures of two or more thereof.

For example, of the phthalic acid esters, dioctyl phthalate, dibutyl phthalate, diisoundecyl phthalate, or butylbenzyl phthalate is suitable, and of the adipates, dioctyl adipate, diisodecyl adipate, diisodecyl succinate, dibutyl sebacate, or butyl oleate.

Also suitable as plasticizers are the pure or mixed ethers of monofunctional, linear or branched C4-16 alcohols or mixtures of two or more different ethers of such alcohols, for example, dioctyl ether (obtainable as Cetiol OE, Cognis Deutschland GmbH, Düsseldorf).

Endcapped polyethylene glycols are also suitable as plasticizers, for example, polyethylene or polypropylene glycol di-C1-4-alkyl ethers, particularly the dimethyl or diethyl ethers of diethylene glycol or dipropylene glycol, and mixtures of two or more thereof.

Suitable plasticizers are endcapped polyethylene glycols, such as polyethylene or polypropylene glycol dialkyl ethers, where the alkyl group has up to four C atoms, and particularly the dimethyl and diethyl ethers of diethylene glycol and dipropylene glycol. An acceptable curing is achieved in particular with dimethyldiethylene glycol also under less favorable application conditions (low humidity, low temperature). Reference is made to the relevant technical chemistry literature for further details on plasticizers.

Also suitable as plasticizers are diurethanes, which can be prepared, for example, by reacting diols, having OH end groups, with monofunctional isocyanates, by selecting the stoichiometry such that substantially all free OH groups react. Optionally excess isocyanate can then be removed from the reaction mixture, for example, by distillation. A further method for preparing diurethanes consists of reacting monofunctional alcohols with diisocyanates, whereby all NCO groups are reacted if possible.

Component A may contain the plasticizer preferably in an amount of 0 to 40% by weight, preferably in an amount of 0 to 30% by weight based in each case on the total weight of Component A.

If a mixture of plasticizers is used, the amounts refer to the total amount of plasticizers in component A.

### (a-4) foam stabilizer

According to preferred embodiments, component A comprises at least one foam stabilizer.

Low foaming non-ionic surfactants are preferably used, in particular alkoxylated, especially ethoxylated, low-foaming non-ionic surfactants such as alkyl glycosides, alkoxylated, preferably ethoxylated or ethoxylated and propoxylated fatty acid alkyl esters, polyhydroxy fatty acid amides, or amine oxides. Particularly preferred non-ionic surfactants are specified in greater detail below.

Preferred alcohol ethoxylates have a narrowed homolog distribution (narrow range ethoxylates, NRE). In addition to these non-ionic surfactants, fatty alcohols having more than 12 EO can also be used. Examples of these are tallow fatty alcohols having 14 EO, 25 EO, 30 EO, or 40 EO.

Ethoxylated non-ionic surfactants are particularly preferably used which were obtained from C₆₋₂₀ monohydroxy alkanols or C₆₋₂₀ alkyl phenols or C₁₆₋₂₀ fatty alcohols and more than 12 mol, preferably more than 15 mol, and in particular more than 20 mol, ethylene oxide per mol of alcohol. A particularly preferred non-ionic surfactant is obtained from a straight-chain fatty alcohol having 16 to 20 carbon atoms (C₁₆₋₂₀ alcohol), preferably from a C₁₈ alcohol and at least 12 mol, preferably at least 15 mol and in particular at least 20 mol of ethylene oxide. Of these, what are referred to as "narrow range ethoxylates" are particularly preferred.

Surfactants that are preferably used come from the group of the alkoxylated non-ionic surfactants, in particular the ethoxylated primary alcohols and mixtures of these surfactants with structurally complex surfactants such as polyoxypropylene/polyoxyethylene/polyoxypropylene ((PO/EO/PO) surfactants). Such (PO/EO/PO) non-ionic surfactants are also characterized by good foam control.

### (a-5), (b-3) surface-treated calcium carbonate

According to preferred embodiments, component A and/or component B optionally comprises surface-treated calcium carbonate.

Preferred surface treated calcium carbonate particles comprise a treatment layer on the surface of the calcium carbonate particles comprising
i. at least one aliphatic aldehyde and/or salty reaction products thereof, and/or
ii. at least one mono-substituted succinic anhydride consisting of succinic anhydride mono-substituted with a group selected from a linear, branched, aliphatic and cyclic group having a total amount of carbon atoms from at least C₂ to C₃₀ in the substituent and/or salty reaction products thereof, and/or
iii. at least one polydialkylsiloxane, and/or
iv. at least one alkylksilane, and/or
v. mixtures of the materials according to i. to iv.

Particularly preferred surface treated calcium carbonate particles comprise a hydrophobic coating and are preferably coated with alkylsilane with comprising 4 to 22 carbon atoms e.g., hexadecyltrimethoxysilane, hexadecyltriethoxysilane, octyltriethoxysilane, octyltrimethoxysilane and others or aliphatic carboxylic acid or a salt thereof. Saturated or unsaturated carboxylic acids comprising 4 to 22 carbon atoms, preferably comprising 6 to 16 carbon atoms, more preferably comprising 10 to 12 carbon atoms are also particularly preferred for said coating, wherein saturated carboxylic acids are most preferred. In that context, use of lauric acid and of stearic acid, especially of stearic acid is particularly favored.

### (a-6), (b-4) surface treated silica

According to preferred embodiments, component A and/or component B optionally comprises surface-treated silica.

The silica preferably has a BET surface area of 10 to 250 m²/g. When it is used, it can cause additional increase in the viscosity of component A and/or component B to achieve a thixotropic formulation and it can contribute to strengthening the cured foam.

It is likewise conceivable to use silica with a BET surface area, advantageously with 100 to 250 m²/g, particularly 110 to 170 m²/g, as a filler. Because of the higher BET surface area, the same effect, e.g., strengthening of the cured foam, can be achieved at a smaller weight proportion of silicic acid. Further substances can thus be used to improve the composition described herein in terms of other requirements.

### (a-7), (b-5) aminosilane and/or aminosilane oligomer

According to preferred embodiments, component A and/or component B optionally comprises at least one aminosilane and/or aminosilane oligomer, preferably as adhesion promoters.

Said aminosilanes may be selected from 3-aminopropyltrimethoxysilane, 3-aminopropyltriethoxysilane, aminomethyltrimethoxysilane, aminomethyltriethoxysilane, 3-aminopropylmethyldiethoxysilane, (N-2-aminoethyl)-3-aminopropyltrimethoxysilane, (N-2-aminoethyl)-3-aminopropyltriethoxysilane, diethylenetriaminopropyltrimethoxysilane, phenylamino-methyl-trimethoxy-silane, (N-2-aminoethyl)-3-aminopropylmethyldimethoxysilane, 3-(N-phenylamino)propyl-trimethoxysilane, 3-piperazinylpropylmethyldimethoxysilane, 3-(N,N-dimethylaminopropyl)aminopropylmethyldimethoxysilane, tri[(3-triethoxysilyl)propyl]amine, tri[(3-trimethoxysilyl)propyl]amine, and the oligomers thereof, 3-(N,N-dimethylamino)propyltrimethoxysilane, 3-(N,N-dimethylamino)propyltriethoxysilane, (N,N-dimethylamino)methyltrimethoxysilane, (N,N-dimethylamino)methyltriethoxysilane, 3-(N,N-diethylamino)propyltrimethoxysilane, 3-(N,N-diethylamino)-propyltriethoxysilane, (N,N-diethylamino)methyltrimethoxysilane, (N,N-diethylamino)methyltriethoxysilane, bis(3-trimethoxysilyl)propylamine, bis(3-triethoxysilyl)propylamine, 4-amino-3,3-dimethylbutyltrimethoxy silane, 4-amino-3,3-dimetylbutyltriethoxy silane, N-(n-butyl)-3-aminopropyltrimethoxysilane, and mixtures thereof, particularly preferably of 3-aminopropyltrimethoxysilane, 3-aminopropyltriethoxysilane, aminomethyltrimethoxysilane, amino methyltriethoxysilane, 3-(N,N-dimethylamino)propyl-trimethoxysilane, 3-(N,N-dimethylamino)propyltriethoxysilane, (N,N-dimethylamino)methyl-trimethoxysilane, (N,N-dimethylamino)methyltriethoxysilane, 3-(N,N-diethylamino)propyltrimethoxysilane, 3-(N,N-diethylamino)-propyltriethoxysilane, (N,N-diethylamino)methyltrimethoxysilane, (N,N-diethylamino)methyl-triethoxysilane, bis(3-trimethoxysilyl)propylamine, and bis(3-triethoxysilyl)propylamine, 4-amino-3,3-dimethylbutyltrimethoxy silane, 4-amino-3,3-dimetylbutyltriethoxy silane, or N-(n-butyl)-3-aminopropyltrimethoxysilane, or oligomers obtained from the condensation of at least one of the above-mentioned aminosilanes, or mixtures thereof. The above-mentioned monomeric aminosilanes or oligomers can be oligomerized together with alkyl-, alkenyl- or aryl-alkoxysilanes, preferably methyltri(m)ethoxysilane, ethyltri(m)ethoxysilane, propyltri(m)ethoxysilane, vinyltri(m)ethoxysilane, n-butyltri(m)ethoxysilane, isobutyltri(m)ethoxysilane, phenyltri(m)ethoxysilane, and/or octyltri(m)ethoxysilane.

In various embodiments, component A and/or component B further comprise at least one aminosilane as described above, in particular one of the tertiary aminosilanes. *"Tertiary aminosilane",* as used herein, refers to an aminosilane wherein the nitrogen atom of the amino group is covalently linked to three non-hydrogen residues.

### (a-8), (b-6) catalyst

According to preferred embodiments, component A and/or component B comprises at least one curing catalyst, preferably selected from tin catalysts, titanium catalysts, aluminum catalysts, or zirconium catalysts, more preferably tin catalysts or titanium catalysts, or mixtures thereof.

In various embodiments, the curing catalyst may be a tin compound, preferably an organotin compound or an inorganic tin salt. Tin in these tin compounds is preferably bivalent or tetravalent. The curing catalyst can be added to the composition particularly as a crosslinking catalyst. Suitable inorganic tin salts are, for example, tin(II) chloride and tin(IV) chloride. Organotin compounds (tin organyles) are used preferably as the tin compounds, however. Suitable organotin compounds are, for example, the 1 ,3-dicarbonyl compounds of bivalent or tetravalent tin, for example, the acetylacetonates such as di(n-butyl)tin(IV) di(acetylacetonate), di(n-octyl)tin(IV) di(acetylacetonate), (n-octyl)(n-butyl)tin(IV) di(acetylacetonate); the dialkyl tin(IV) dicarboxylates, for example, di-n-butyltin dilaurate, di-n-butyltin maleate, di-n-butyltin diacetate, di-n-octyltin dilaurate, di-n-octyltin diacetate, or the corresponding dialkoxylates, for example, di-n-butyltin dimethoxide; oxides of tetravalent tin, for example, dialkyltin oxides, such as, for example, di-n-butyltin oxide and di-n-octyltin oxide; and the tin(II) carboxylates such as tin(ll) octoate or tin(II) phenolate.

Suitable furthermore are tin compounds of ethyl silicate, dimethyl maleate, diethyl maleate, dioctyl maleate, dimethyl phthalate, diethyl phthalate, dioctyl phthalate, nonadecylic acid, myristic acid, such as, for example, di(n-butyl)tin(IV) di(methyl maleate), di(n-butyl)tin(IV) di(butyl maleate), di(n-octyl)tin(IV) di(methyl maleate), di(n-octyl)tin(IV) di(butyl maleate), di(n-octyl)tin(IV) di(isooctyl maleate); and di(n-butyl)tin(IV) sulfide, (n-butyl)₂Sn(SCH₂COO), (n-octyl)₂Sn(SCH₂COO), (n-octyl)₂Sn(SCH₂CH₂COO), (n-octyl)₂Sn(SCH₂CH₂COOCH₂CH₂OCOCH₂S), (n-butyl)₂-Sn(SCH₂COO-i-C₈H₁₇)₂, (n-octyl)₂Sn(SCH₂COO-i-C₈H₁₇)₂, and (n-octyl)₂Sn(SCH₂COO-n-C₈H₁₇)₂.

Preferably, the tin compound is selected from 1 ,3-dicarbonyl compounds of bivalent or tetravalent tin, the dialkyltin(IV) dicarboxylates, the dialkyltin(IV) dialkoxylates, the dialkyltin(IV) oxides, the tin(II) carboxylates, and mixtures thereof.

Particularly preferably, the tin compound is a dialkyltin(IV) oxide (e. g. di-n-octyltin oxide) or dialkyltin(IV) dicarboxylate, particularly di-n-butyltin dilaurate, di-n-butyltin diacetate, or di-n-octyltin dilaurate.

Additionally, or alternatively, other metal-based condensation catalysts may be used, including, without limitation, compounds of titanium such as organotitanates or chelate complexes, cerium compounds, zirconium compounds, molybdenum compounds, manganese compounds, copper compounds, aluminum compounds, or zinc compounds or their salts, alkoxylates, chelate complexes, or catalytically active compounds of the main groups or salts of bismuth, lithium, strontium, or boron.

Further suitable (tin-free) curing catalysts are, for example, organometallic compounds of iron, particularly the 1 ,3-dicarbonyl compounds of iron such as, e.g., iron(III) acetylacetonate.

Boron halides such as boron trifluoride, boron trichloride, boron tribromide, boron triiodide, or mixtures of boron halides can also be used as curing catalysts. Particularly preferred are boron trifluoride complexes such as, e.g., boron trifluoride diethyl etherate, which as liquids are easier to handle than gaseous boron halides.

Further, amines, nitrogen heterocycles, and guanidine derivatives are suitable in general for catalysis. An especially suitable catalyst from this group is 1 ,8-diazabicyclo[5.4.0]undec-7-ene (DBU). Titanium, aluminum, and zirconium compounds, or mixtures of one or more catalysts from one or more of the just mentioned groups may also be used as catalysts.

Suitable as titanium catalysts are compounds that have hydroxy groups and/or substituted or unsubstituted alkoxy groups, therefore titanium alkoxides of the general formula

Ti(OR^{z})₄,

wherein R^{z} is an organic group, preferably a substituted or unsubstituted hydrocarbon group having 1 to 20 C atoms, and the 4 alkoxy groups -OR^{z} are identical or different. Further, one or more of the -OR^{z} groups can be replaced by acyloxy groups -OCOR^{z}.

Likewise suitable as titanium catalysts are titanium alkoxides in which one or more alkoxy groups are replaced by a hydroxy group or halogen atoms.

Further, titanium chelate complexes can be used.

Aluminum catalysts can also be used as curing catalysts, e.g., aluminum alkoxides

Al(OR^{z})₃,

wherein R^{z} has the above meaning; i.e., it is an organic group, preferably a substituted or unsubstituted hydrocarbon group having 1 to 20 C atoms and the three R^{z} groups are identical or different. In the case of aluminum alkoxides as well, one or more of the alkoxy groups can be replaced by acyloxy groups - OC(O)R^{z}.

Further, aluminum alkoxides can be used in which one or more alkoxy groups are replaced by a hydroxy group or halogen atoms.

Of the described aluminum catalysts, the pure aluminum alcoholates are preferred in regard to their stability to moisture and the curability of the mixtures to which they are added. In addition, aluminum chelate complexes are preferred.

Suitable as zirconium catalysts are, e.g.: tetramethoxyzirconium or tetraethoxyzirconium.

Diisopropoxyzirconium bis(ethyl acetoacetate), triisopropoxyzirconium (ethyl acetoacetate), and isopropoxyzirconium tris(ethyl acetoacetate) are used with very particular preference.

Further, zirconium acylates, halogenated zirconium catalysts, or zirconium chelate complexes can also be used.

In addition, carboxylic acid salts of metals or also a mixture of a number of such salts can be employed as curing catalysts, whereby these are selected from the carboxylates of the following metals: calcium, vanadium, iron, zinc, titanium, potassium, barium, manganese, nickel, cobalt, and/or zirconium.

Of the carboxylates, the calcium, vanadium, iron, zinc, titanium, potassium, barium, manganese, and zirconium carboxylates are preferred, because they exhibit a high activity. Calcium, vanadium, iron, zinc, titanium, and zirconium carboxylates are particularly preferred. Won and titanium carboxylates are very particularly preferred.

Further, phosphorous containing organic compounds or mixtures thereof can be used as alternative to metal-based catalysts. Examples are triethylphosphat or 2-ethylhexyl-phosphat.

Alternatively strong Bronstedt acids, especially organic acids such as dodecylbenzenesulfonic acid can be used as catalysts.

### (h) Inhibitor

In certain embodiments of the present invention, the component A may comprise at least one inhibitor, preferably selected from tetravinyltetramethylcyclotetrasiloxane (vinyl D4), ethynylcyclohexanol (ECH) and mixtures thereof.

In order to prolong the creaming time to ensure the sealing performance without significantly prolonging the curing time, the ratio of by weight of catalyst to inhibitor is preferably from 3.5:1 to 4.5:1.

It is possible to use commercially available products in the present invention. Examples thereof include Inhibitors MVC and DVS available from Evonik Nutrition & Care GmbH.

Preferred in accordance with the invention is a two-component foamable silane-modified polymer composition wherein the amount of the inhibitor is from 0.06% to 0.6% by weight, preferably 0.12% to 0.2% by weight, such as 0.12%, 0.14%, 0.16%, 0.18% by weight, based on the total weight of the composition A.

Component A and/or Component B can comprise at least one additional auxiliary substance, preferably selected, for example, from the group consisting of plasticizers, extenders, stabilizers, antioxidants, fillers, reactive diluents, drying agents, UV stabilizers, rheological aids, and/or solvents. Of particular importance are typically plasticizers, fillers, and stabilizers, comprising antioxidants and UV stabilizers.

Preferably, Component A and/or Component B therefore contain at least one auxiliary substance.

It is conceivable that the viscosity of Component A and/or Component B is too high for certain applications. It can then be reduced in a simple and expedient way usually by using a reactive diluent, without any signs of demixing (e.g., plasticizer migration) occurring in the cured mass.

Solvents and/or plasticizers can be used, in addition to or instead of a reactive diluent, for reducing the viscosity of Component A and/or Component B.

Suitable as solvents are aliphatic or aromatic hydrocarbons, halogenated hydrocarbons, ketones, ethers, esters, ester alcohols, keto alcohols, keto ethers, keto esters, and ether esters.

In preferred embodiments, the composition according to the invention comprises the following components in the stated proportions by weight:
Component A comprises
   (a-1) 5 wt.% to 70 wt.%, preferably 15 wt.% to 50 wt.%, of at least one silane modified polymer,
   (a-2) 0.5 wt.% to 25 wt.%, preferably 5 wt.% to 15 wt.%, of at least one chemical blowing agent selected from the group consisting of alkali metal bicarbonate, alkali metal carbonate, ammonium bicarbonate and ammonium carbonate,
   (a-3) 0 wt.% to 50 wt.%, preferably 5 wt.% to 25 wt.%, of optionally plasticizer,
   (a-4) 0 wt.% to 10 wt.%, preferably 0.05 wt.% to 5 wt.%, of at least one foam stabilizer,
   (a-5) 0 wt.% to 80 wt.%, preferably 20wt.% to 50 wt.%, of optionally surface treated calcium carbonate,
   (a-6) 0 wt.% to 10 wt.%, preferably 0.5 wt.% to 3 wt.%, of optionally surface treated silica,
   (a-7) 0 wt.% to 15 wt.%, preferably 1 wt.% to 7.5 wt.%, of optionally aminosilane or aminosilane oligomer, and
   (a-8) 0 wt.% to 5 wt.%, preferably 0.05 wt.% to 2 wt.%, of at least one catalyst, each based on the total weight of component A, wherein the proportions by weight preferably add up to 100 wt.-%.; and
component B comprises
   (b-1) 0.5 wt.% to 80 wt.%, preferably 5 wt.% to 20 wt.%, of water,
   (b-2) 1 wt.% to 40 wt.%, preferably 10 wt.% to 30 wt.%, of at least one an organic acid,
   (b-3) 0 wt.% to 80 wt.%, preferably 20 wt.% to 50 wt.%, of optionally surface treated calcium carbonate,
   (b-4) 0 wt.% to 10 wt.%, preferably 0.5 wt.% to 3 wt.%, of optionally surface treated silica,
   (b-5) 0 wt.% to 15 wt.%, preferably 1 wt.% to 7.5 wt.%, of optionally aminosilane or aminosilane oligomer, and
   (b-6) 0 wt.% to 5 wt.%, preferably 0.05 wt.% to 2 wt.%, of optionally catalyst, each based on the total weight of component B,
   wherein the proportions by weight preferably add up to 100 wt.-%.

The optionally surface treated calcium carbonate ((a-5) and (b-3), respectively), the optionally surface treated silica ((a-6) and (b-4), respectively), optionally an aminosilane or aminosilane oligomer ((a-7) and (b-5), respectively) and/or the at least one catalyst ((a-8) and (b-6), respectively) may be comprised in component A, component B or both. However, according to particularly preferred embodiments of the invention, component A comprises 0 wt.% to 5 wt.%, preferably 0.05 wt.% to 2 wt.%, of at least one catalyst, each based on the total weight of component A, and component B does not comprise a catalyst.

With regard to the preferred representatives of the individual components and the preferably used quantities thereof, the statements made above in the description of the respective components apply.

The preparation of component A and B according to the invention can take place by simple mixing of the at least one silane modified polymer (a-1), and the at least one chemical blowing agent (a-2), and optionally the other ingredients described herein for component A; and water (b-1) and the at least one organic acid (b-2), and optionally the other ingredients described herein, for component B respectively. This can take place in suitable dispersing units, e.g., a high-speed mixer.

In this case, preferably, care is taken that the mixture of component A does not come into contact with moisture as far as possible, which could lead to an undesirable premature curing. Suitable measures are sufficiently known and comprise, for example, working in an inert atmosphere, possibly under a protective gas, and drying/heating of individual components before they are added.

Preferred in accordance with the invention is a two-component foamable silane-modified polymer composition, wherein the component A and the component B can be mixed in a ratio by weight of ranging from 7:1 to 1:7, preferably from 5:1 to 1:2, and more preferably 4:1 to 1:1.

A further aspect of the present invention relates to a method for preparing a foam attached to a part of assembly in situ, comprising the following steps:
I. preparing a two-component foamable silane-modified polymer composition of the invention;
II. mixing component A and component B at a reaction temperature from 15 to 100°C, preferably from 20 to 80°C, to form a reaction mixture; and
III. applying the reaction mixture to at least one surface of a part.

In the step II above, the components A and B can be mixed by dynamic mixing at 2,000 to 3,000 rpm.

A further aspect in connection with the present invention relates to the silane-modified polymer foam obtained by said method. Preferably, the silane-modified polymer foam comprises closed cells and a fine and uniform cell structure.

A further aspect in connection with the present invention relates to the use of a two-component foamable silane-modified polymer composition or the silane-modified polymer foam of the invention in gasket, sealant, or adhesive. Preferred in accordance with the invention is the use of the embodiments identified earlier on above as being preferred or more preferred, for the two-component foamable silane-modified polymer composition of the invention or for silane-modified polymer foam of the invention, where preferably two or more of the aspects or corresponding features described for the two-component foamable silane-modified polymer composition or for the silane-modified polymer foam are combined with one another.

Many modifications and other embodiments of the inventions set forth herein will come to mind to one skilled in the art to which these inventions pertain having the benefit of the teachings presented in the foregoing descriptions. Therefore, it is to be understood that the inventions are not to be limited to the specific embodiments disclosed and that modifications and other embodiments are intended to be included within the scope of the appended claims. Moreover, although the foregoing descriptions describe some example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation. The following examples serve to illustrate the invention, but the invention is not limited thereto.

The following examples serve to illustrate the invention, but the invention is not limited thereto.

### Examples

The batch preparation proceeds as follows:
1. Component A: With a precision scale such as Sartorius BCA4202-1S the silyl-terminated polyether is weighed in a 310mL PP cup. The NaCHOs, manually crushed for 10 min, is added afterwards. It is mixed with a Hauschild SpeedMixer DAC 400.2 VAC-P LR for 1' at 1500 RPM and 1' at 1950 RPM.
2. Component B is prepared the same way, weighing the acid first, then the polyether-modified polysiloxane, water and finishing up with 2-ethylhexylphosphate. Mixing time and speed is the same as for Component A.
3. Component B is then added on top of component A. The same mixer is used at 2300 RPM for 30".

**Table 1: 2K formulations**

| **Component** | **Example 1 (wt.%)** | **Example 2 (wt.%)** | **Component** |
|---|---|---|---|
| silyl-terminated polyether¹ | 71.24 | 65.67 | A |
| NaHCO₃ | 6.92 | 6.38 | A |
| adipic Acid | 6.02 | 0.00 | B |
| ascorbic Acid | 0.00 | 13.37 | B |
| water | 6.15 | 5.67 | B |
| polyether-modified polysiloxane² | 6.92 | 6.38 | B |
| 2-ethylhexylphosphate | 2.77 | 2.55 | B |

| | | | |
|---|---|---|---|
| 1: Silyl MA 490, Kaneka Corporation, Japan 2: Tegostab B 4690, Evonik Industries AG, Germany | | | |

Samples were cured over 24h. After that time a constant cell structure was obtained, no residual tackiness was observed.

The sample preparation and testing proceeds as follows:
- For water absorption, 5g samples from each batch are prepared. A week after they are made, they are submerged in water for exactly 24h at room temperature. After that weight gain was determined.
- For hardness, density and compression set, 10g samples are prepared.
   ∘ Shore 00 was determined by a standard lab Shore tester which is placed on top of the sample. ∘ Density is determined by water displacement.
   ∘ Compression set is determined by compressing the sample until 50% of its original height, stored in an oven at 70°C for 22h, compression clamps are removed, and the sample reconditioned at room temperature for 30 min. Then recovery is determined by comparing to the original foam.
- For mechanical property testing, 30g of formulation are poured in a metal plate, from which S2 test specimen are cut and mechanical testing done with them in a Zwick tensile tester.

**Table 2: properties**

| **Property** | **Example 1** | **Example 2** | **Comparative Example³** |
|---|---|---|---|
| Hardness (Shore 00) | n.d. | 26.40 | 42 |
| Density (g/cm³) | n.d. | 0.46 | 0.23 |
| Compression Set (Absolute Loss, %) | 15.14 | 25.98 | n.d. |
| Elongation at Break (%) | 200.20 | 209.50 | 89 |
| Tensile Strength (kPa) | 200.60 | 243.75 | 122 |

| | | | |
|---|---|---|---|
| 3: K31-A-9675-5-VP / B-4; mix ratio 4.5:1 n.d. = not determined | | | |

## Claims

1. A two-component foamable silane-modified polymer composition comprising:
a component A comprising
(a-1) at least one silane modified polymer, and
(a-2) at least one chemical blowing agent selected from the group consisting of alkali metal bicarbonate, alkali metal carbonate, ammonium bicarbonate and ammonium carbonate, and
a component B comprising
(b-1) water, and
(b-2) at least one an organic acid.

2. The composition according to claim 1, wherein composition A comprises
i) at least one compound of Formula (I)
Y-[(CR¹₂)_{b}-SiRₐ(OR²)₃₋ₐ]ₓ (I)
wherein, in Formula (I),
Y denotes an x-valent polymer radical bonded via nitrogen, oxygen, sulfur or carbon,
R is independently selected from a monovalent, optionally substituted, SiC-bonded hydrocarbon radical,
R¹ is independently selected from hydrogen or a monovalent, optionally substituted hydrocarbon radical which may be attached to the carbon atom via nitrogen, phosphorus, oxygen, sulfur or carbonyl group,
R² is independently selected from hydrogen or a monovalent, optionally substituted hydrocarbon radical,
x is an integer from 1 to 10, preferably 1, 2 or 3, especially preferably 1 or 2,
a is independently selected from 0, 1 and 2, preferably 0 and 1, and
b is independently selected from an integer from 1 to 10, preferably 1, 3 and 4, particularly preferably 1 and 3, in particular 1;
and/or
ii) at least one compound containing units of the following Formula (V)
R⁶_{c}(R⁷O)_{d}R⁸ₑSiO(_{4-c-d-e)/2} (V)
wherein, in Formula (V)
R⁶ is independently selected from hydrogen, a monovalent, SiC-bonded, optionally substituted aliphatic hydrocarbon radical or a divalent, optionally substituted aliphatic hydrocarbon radical, which bridges two units of the formula (V) R⁷ is independently selected from hydrogen or a monovalent, optionally substituted hydrocarbon radical,
R⁸ is independently selected from a monovalent, SiC-bound, optionally substituted aromatic hydrocarbon residue,
c is 0, 1, 2 or 3,
d is 0, 1, 2 or 3, preferably 0, 1 or 2, particularly preferably 0 or 1, and
e is 0, 1 or 2, preferably 0 or 1,
with the proviso that the sum of c+d+e is less than or equal to 3, wherein in at least 40% of the units of formula (V) the sum c+e is preferably equal to 0 or 1.

3. The composition according to claim 2, wherein component A comprises at least one compound of Formula (I).

4. The composition according to any one of claims 1 to 3, wherein at least one chemical blowing agent selected from the group consisting of LiHCOs, Li₂CO₃, NaHCOs, Na₂CO₃, KHCOs, and K₂CO₃, preferably from the group consisting of NaHCOs, Na₂CO₃, more preferably from the group consisting of NaHCOs.

5. The composition according to any one of claims 1 to 3, wherein component B comprises at least one organic acid having a pKₐ of 1.0 to 8.0, more preferably having a pKₐ of 1.3 to 6.0.

6. The composition according to claim 5, wherein said at least one organic acid is selected from the group consisting of acetic acid, para-toluenesulfonic acid, adipic acid, ascorbic acid, benzenesulfonic acid, camphorsulfonic acid, malic acid, maleic acid, glyoxylic acid, citric acid, formic acid, pyruvic acid, tartaric acid, phthalic acid, acetylsalicylic acid, salicylic acid, lactic acid, dihydroxy fumaric acid, mandelic acid, malonic acid, glycolic acid and oxalic acid or combinations thereof.

7. The composition according to any one of claims 1 to 6, wherein component A comprises plasticizer.

8. The composition according to any one of claims 1 to 7, wherein component A comprises at least one foam stabilizer.

9. The composition according to any one of claims 1 to 8, wherein component A and/or component B comprises at least one surface treated calcium carbonate and/or at least one surface treated silica.

10. The composition according to any one of claims 1 to 9, wherein component A and/or component B comprises at least one aminosilane or aminosilane oligomer.

11. The composition according to any one of claims 1 to 10, wherein
component A comprises
(a-1) 5 wt.% to 70 wt.%, preferably 15 wt.% to 50 wt.%, of at least one silane modified polymer,
(a-2) 0.5 wt.% to 25 wt.%, preferably 5 wt.% to 15 wt.%, of at least one chemical blowing agent selected from the group consisting of alkali metal bicarbonate, alkali metal carbonate, ammonium bicarbonate and ammonium carbonate,
(a-3) 0 wt.% to 50 wt.%, preferably 5 wt.% to 25 wt.%, of plasticizer,
(a-4) 0 wt.% to 10 wt.%, preferably 0.05 wt.% to 5 wt.%, of at least one foam stabilizer,
(a-5) 0 wt.% to 80 wt.%, preferably 20wt.% to 50 wt.%, of at least one surface treated calcium carbonate,
(a-6) 0 wt.% to 10 wt.%, preferably 0.5 wt.% to 3 wt.%, of at least one surface treated silica,
(a-7) 0 wt.% to 15 wt.%, preferably 1 wt.% to 7.5 wt.%, of at least one aminosilane or aminosilane oligomer, and
(a-8) 0 wt.% to 5 wt.%, preferably 0.05 wt.% to 2 wt.%, of at least one catalyst, each based on the total weight of component A; and
component B comprises
(b-1) 0.5 wt.% to 80 wt.%, preferably 5 wt.% to 20 wt.%, of water,
(b-2) 1 wt.% to 40 wt.%, preferably 10 wt.% to 30 wt.%, of at least one an organic acid,
(b-3) 0 wt.% to 80 wt.%, preferably 20 wt.% to 50 wt.%, of at least one surface treated calcium carbonate,
(b-4) 0 wt.% to 10 wt.%, preferably 0.5 wt.% to 3 wt.%, of at least one surface treated silica,
(b-5) 0 wt.% to 15 wt.%, preferably 1 wt.% to 7.5 wt.%, of at least one aminosilane or aminosilane oligomer, and
(b-6) 0 wt.% to 5 wt.%, preferably 0.05 wt.% to 2 wt.%, of at least one catalyst, each based on the total weight of component B.

12. The composition according to any one of claims 1 to 11, wherein the composition comprises the component A and the component B in a ratio by weight of ranging from 7:1 to 1:7, preferably from 5:1 to 1:2, and more preferably 4:1 to 1:1.

13. A method for preparing a silane-modified polymer foam attached to a part of assembly in situ, comprising the steps:
I. preparing a two-component foamable silane-modified polymer composition according to any of claims 1 to 12;
II. mixing the component A and component B at a reaction temperature from 15 to 100°C, preferably from 20 to 80°C, to form a reaction mixture; and
III. applying the reaction mixture to at least one surface of part.

14. A silane-modified polymer foam obtained by the method according to claim 13.

15. Use of the two-component foamable silane-modified polymer composition according to any one of claims 1 to 12 or the silane-modified polymer foam according to claim 14 in gasket, sealant or adhesive.
